# EUROPEAN PATENT APPLICATION

(11) **EP 4 379 155 A1**
(43) Date of publication of application: **05.06.2024**
(21) Application number: 22848749.2
(22) Date of filing: 27.07.2022
(51) Int. Cl.: E03B 1/04

(54) **WATER-SAVING DEVICE FOR DOMESTIC HOT WATER SYSTEMS**

(30) Priority: 29.07.2021 ES 202131580 U
(71) Applicant: Universitat Politècnica de València, 46022 Valencia (ES)
(72) Inventor: MOLLÁ VAYÁ, Ramón Pascual, 46022 Valencia (ES)
(74) Representative: Ibarra Garcia, Isabel
(86) International application number: PCT/ES2022/070497
(87) International publication number: WO 2023/007053

(57) **Abstract**

The present invention relates to a water-saving device for domestic hot water (DHW) systems, which comprises a first section of pipe through which DHW circulates to a tap, a second section of pipe through which cold water circulates to a tap, and third section that joins the first and second sections. The configuration of the device includes a temperature controller, a solenoid valve, a power source and a flow switch, wherein the temperature controller activates the solenoid valve when a temperature sensor measures in the first section of pipe a temperature below a set reference temperature. Advantageously, the device of the invention can be installed in different consumption points, acting simultaneously and independently according to local demand generated in each point of consumption by the DHW users.

## Description

Water-saving device for domestic hot water systems.

### FIELD OF THE ART

The present utility model relates to a water-saving device, equipment which will be interconnected to a domestic hot water (DHW) system, such that when there is a demand for DHW, the device automatically recirculates cold water contained in the hot water pipe until it reaches the set reference temperature.

Specifically, the proposed device has a plurality of sections of pipes, a temperature controller, at least one solenoid valve, a flow switch and an electric power source the configuration of which automatically enables the recirculation of water circulating through a domestic hot water pipe. DHW returns either through an explicit pre-existing pipe or through the cold water pipe which reaches the DHW consumption point. Recirculation is activated and maintained in a completely automated manner until reaching a set reference temperature, without requiring the user to perform explicit manual activation or inspection of the temperature of the water circulating through the pipe.

### BACKGROUND OF THE INVENTION

It is common for many systems to have a considerable distance between the DHW consumption point and the DHW generation or storage point, causing inevitable wastage of cold and warm water circulating through the pipe by letting it run down the drain until the service temperature is reached.

This situation causes wastage of potable water and energy invested to heat the entire water circuit until DHW comes out of the tap or consumption point. For this reason, water-saving devices which enable recirculation in domestic hot water systems in an attempt to prevent the mentioned wastage are known in the prior art.

Such solutions are disclosed in patent document no. ES2059268 "Energy- and water-saving shower assembly", utility model no. ES1067104U "Assembly for utilising and saving potable cold water wasted in the bathroom to fill the toilet cistern", European patent validated in Spain with no. ES2164823T3 "Installation for heating circulation heating water and sanitary water" and patent no. ES2262440 "Water- and energy-saving system for showers or bathtubs". The operation of the mentioned documents is based on an auxiliary tank and requires a complementary infrastructure consisting of pipes for the recirculation and return of water, which implies construction in houses and a high economic cost. Likewise, the incorporation of an auxiliary tank requires occupying additional space in the house itself.

Moreover, the solutions disclosed in patent document no. ES2244358 "Water-saving device" and in patent document no. ES2298039 "Water- and energy-saving system" propose user-operated controls, in which the saving device blocks water from coming out through the tap until the water reaches the required temperature. These solutions present a malfunction problem, as well as the drawback that, as the water is blocked from coming out, hot water does not reach the PC properly.

The solution described in utility model no. ES 1065941 U "Sanitary system for energy saving and water recycling" requires each tap to have three supply connections, one for supplying cold water, another for supplying hot water and a third for the return of hot water in the event that the water does not have a selected temperature. This solution presents a great structural complexity as it requires a new supply connection and specially constructed bathroom fittings, so it is very expensive, especially in homes already built where its implementation would be practically unfeasible.

Moreover, patent no. ES2222848 "Improvements introduced in the object of main patent no. 200401458 entitled water saving system and method" requires the transfer of water from the cold water circuit to a point of the system upstream of the hot water generator. In this case, the solution provided involves a complex system which prohibits its installation in pre-existing houses and requires an exclusively manually-operated valve, which can cause serious problems if the user forgets to disconnect said valve or leaves it running for too long. In this case, the circuit would be recirculating increasingly hotter water until, after a given time, both the DHW piping and the cold water return piping reach the safety cut-off temperature of the boiler or thermostatic heater (up to 90°C). In this case, when opening the tap, the user would receive water at a very high temperature, which could cause severe burns. This would likewise occur with thermostatic taps since, when mixing DHW with the contents of the cold water pipe, since the latter is at the same temperature as the hot water, the water would also come out at 90°C. Furthermore, costly breakdowns may occur in the system due to overheating and overpressure as a result of the release of gases due to boiling.

Having known the background set forth in detail above, a new water-saving device which enables a less complex system and a high tolerance to failures due to the low complexity of the elements involved in its configuration, making it more efficient than other known devices, has been developed.

### DESCRIPTION OF THE INVENTION

The present invention discloses a very low cost, highly robust, and easily maintained water-saving device which controls water expenditure, the configuration of which favours the easy installation thereof in any system. The device interconnects cold water and DHW circuits and enables the cold water contained in the hot water pipe to automatically return to the boiler through the cold water pipes when the user opens the tap demanding DHW. The developed device allows maintaining this recirculation until the temperature of the DHW at the measured point reaches the set temperature. In the case of systems already explicitly having a third return pipe, it could be connected interchangeably to both the return pipe and the cold water pipe, allowing the same operation, regardless of the choice made.

This device is installed before a tap or consumption point or in a branching of pipes in the ceiling of a room before distributing DHW in the different outlets such as, for example, the taps installed in a washbasin, sink, bidet, shower, etc.

The system also allows several devices to be connected simultaneously along the DHW branches and pipes, acting as a complex and coordinated system that gradually distributes and heats DHW piping based on the location in which the final user demand occurs.

The elements making up the water-saving device of the present invention are: a first section of pipe which is interconnected to a pipe through which DHW circulates to a tap, a second section of pipe which is interconnected to a pipe through which cold water circulates to a tap, a third section of pipe that joins the first section of pipe and the second section of pipe. Similarly, the water-saving device includes a temperature controller which is linked to a temperature sensor installed in the first section of pipe and at least one solenoid valve arranged downstream in the first section of pipe enabling the recirculation of water when the temperature sensor measures a temperature below a set reference temperature.

It should be indicated that the reference temperature is set based on user and/or system requirements, said parameter being that which triggers the recirculation action, and therefore water saving.

In order to provide electrical energy to the temperature controller and the solenoid valve, the water-saving device includes an electric power source which can be connected to the power grid or provided with charge accumulators, typically batteries, for example.

Moreover, the device of the invention also includes a flow switch arranged upstream of the first section of pipe. The flow switch is responsible for activating the power source to electrically power the temperature controller and the solenoid valve. Therefore, the flow switch prevents the device of the invention from permanently consuming energy, which is neither cost-effective nor ecological. Likewise, the inclusion of the flow switch allows prolonging the service life of the water-saving device, since it is only active when the service thereof is needed, remaining inactive as long as there is no demand for DHW.

Specifically, the device of the invention enables the recirculation of water found in the pipe through which DHW circulates to the tap when the temperature sensor measures in the first section of pipe a temperature below a set reference temperature. The purpose is to prevent circulation through the tap of water that does not reach the temperature set as the reference temperature. In other words, the device of the invention prevents water that does not comply with the reference temperature from coming out through the tap.

To that end, the temperature controller activates the solenoid valve when the temperature sensor measures in the first section of pipe a temperature below a set reference temperature.

Specifically, the solenoid valve having the saving device of the invention enables the necessary allowance to allow DHW to come out through the hot water tap if it has reached the reference temperature. The water, which is wasted in systems without this invention, is recirculated in the opposite direction through the cold water pipe, causing said water to pass through the water heater again for heating until it reaches the reference temperature in the final consumption point.

It is at this moment that the solenoid valve is activated to allow the passage of water until it comes out through the tap and stops its recirculation. In that moment, the tap exhibits a common behaviour, like any tap on the market.

In a first embodiment of the invention, the solenoid valve is made up of a three-way solenoid valve arranged in the first section of pipe, and wherein one way connects with the third section of pipe for recirculating water and the other two ways prolong the first section of pipe with the DHW inlet of the tap.

In a second embodiment of the invention, the water-saving device has a two-way solenoid valve arranged in the first section of pipe, after the point of attachment of the first section and the third section, making it necessary to include a second two-way solenoid valve arranged in the third section of pipe. This embodiment is explained in detail in the preferred embodiment section of the invention.

Optionally, the temperature controller includes a timer which will cut off recirculation if the device fails to detect an increase in temperature after a reasonable amount of time. The intervention of the timer takes place when, for example, the heater does not work, the gas supply has been interrupted, the power supply has been cut off, the temperature sensor itself has broken down, etc. The mentioned timer will also act in the case where the set reference temperature is reached, but, due to a failure of the device itself, it was not possible to unanchor the solenoid valve(s).

The water-saving device includes, also optionally but in a highly recommendable manner, a safety switch linked to the power source. The safety switch can be deactivated manually in case of emergency, malfunction of the device or lack of use for a period of time. Typically, it will be activated during prolonged absences due to vacations or when leaving a second residence after the weekend is over. If the power source is connected to the power grid, the safety switch is located between the power grid outlet and the power source, and if the device is connected to batteries, the safety switch will be located between the batteries and the device of the invention.

The versatility of the device of the invention allows the interconnection thereof to systems provided with booster pumps. Notwithstanding the foregoing, the device of the present invention optionally includes a booster pump linked to a typical flow switch different from that used in the consumption point. This booster pump is arranged in the first section of pipe, specifically upstream of the flow switch of the device of the invention. Likewise, the device optionally includes a safety switch which is linked to the booster pump and to the flow switch thereof and allows manually deactivating the components to which it is linked, for example, in case of emergency or lack of use for a prolonged period of time.

The saving device of the present invention can be used in domestic and industrial water systems, without the installation of additional systems or works. It can be used in already installed old pipes or in newly constructed systems. It has a minimum cost since it uses already known components and may not require any additional programming if standardized devices already existing on the market are used. It is completely autonomous and adjustable and can be implemented by anyone, even by non-professionals.

Advantageously, the device of the invention can be installed in different consumption points, acting simultaneously and independently according to local demand generated in each consumption point by the DHW users. This thereby enables a water-saving system made up of several DHW-saving devices in accordance with the object of the present invention, wherein each of them can have its own pumping system made up of a booster pump and its corresponding flow switch.

Optionally, the mentioned water-saving system can be made up of a single booster pump and its corresponding flow switch, this pumping system being common to all the devices integrated in the water-saving system, typically at the inlet or outlet of the DHW heater.

Therefore, in any of the mentioned configurations for the water-saving system made up of several DHW-saving devices in accordance with the present invention, said DHW-saving devices can be located in:
- One or in different consumption points, acting simultaneously and independently according to local demand generated in each consumption point by the DHW users.
- One or in different intermediate points of the system, in the branches of the pipe system carrying DHW to the different consumption points, acting simultaneously and independently in a hierarchical manner. Several water-saving devices may also exist in the same branch with some located upstream or others downstream.

The versatility of the water-saving devices of the present invention for constituting systems of greater complexity that enable the automated recirculation of cold water as long as the set reference temperature is not reached is thereby clearly shown.

Additionally, it should be indicated that the water-saving device of the present invention is provided with a hydrogenerator arranged upstream of the first section of pipe for generating energy.

In order to accumulate the energy generated by the hydrogenerator, the device of the invention is provided with batteries connected to the power source, the temperature controller and/or the solenoid valve(s).

In this sense, the hydrogenerator is connected to the solenoid valve, the power source and/or the temperature controller, although optionally, said hydrogenerator can also be connected to the mentioned batteries by means of a power circuit. In other words, the energy supplied by the hydrogenerator is essentially intended for powering the mentioned components to which it is connected, and if there is enough power left, the remaining electric current is stored in the batteries for energy peak demand.

Likewise, it should be indicated that the batteries include a power input, which is used to recharge the batteries, and optionally to insert a USB which can collect and monitor the operation data of the device of the invention.

Optionally, the device of the invention includes a relay, preferably a dual-channel relay, connected to the hydrogenerator and the power source, such that the energy generated by the hydrogenerator activates the relay and the relay connects the power source. This configuration offers a relevant advantage, as it allows the hydrogenerator to act as a flow detector for direct current.

Finally, it should be mentioned that the solenoid valve(s) used in the device of the invention, in any of the embodiments described in detail, are preferably solenoid bistable valve(s). Therefore, the use of bistable solenoid valves in any of the embodiment options described in detail in the present specification enables a considerable reduction of the energy consumption of the developed device. Advantageously, the bistable solenoid valves only consume energy while switching is performed, i.e., it is not necessary to continuously excite the coils while the bistable solenoid valve remains in said state. Another advantage provided by the inclusion of bistable solenoid valves in the device relates to the reduced power required for the use thereof, generating short occasional consumption, thereby reducing the carbon footprint generated by the device.

### DESCRIPTION OF THE FIGURES

To complement the description that will be made below and in order to help better understand the features of the invention according to a preferred practical embodiment thereof, two figures are attached as an integral part of said description in which the following is depicted in a non-limiting illustrative manner:
Figure 1 shows a diagram of a first preferred embodiment of the water-saving device in accordance with the object of the present invention.
Figure 2 shows a diagram of a second preferred embodiment of the water-saving device in accordance with the object of the present invention.

### PREFERRED EMBODIMENT OF THE INVENTION

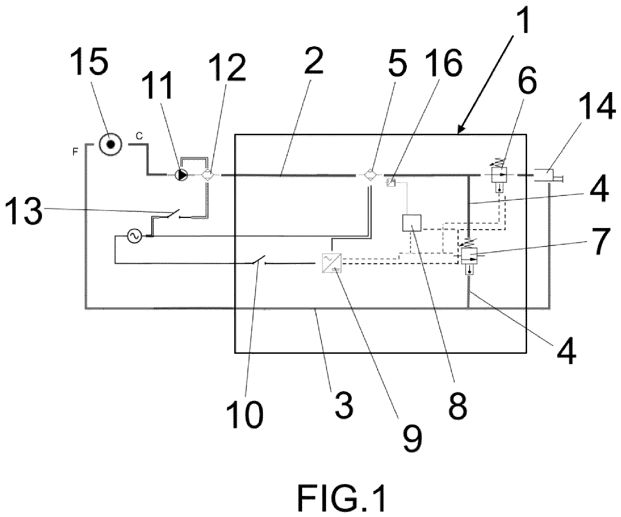

The diagram of a preferred embodiment depicted in Figure 1 shows the elements integrated in the water-saving device of the invention, which is designed for implementation in DHW systems.

Preferably, in a preferred embodiment of the invention the water-saving device (1) is made up of the following elements:
- A first section of pipe (2) for interconnection thereof to a pipe through which DHW circulates to a tap (14).
- A second section of pipe (3) for interconnection thereof to a pipe through which cold water circulates to a tap (14).
- A third section of pipe (4) that joins the first section of pipe (2) and the second section of pipe (3),
- A temperature controller (8) which is linked to a temperature sensor (16), such that the temperature sensor (16) is installed in the first section of pipe (2). Moreover, the temperature sensor (16) is preferably externally coupled to the first section of pipe (2). In other words, preferably before the point of attachment of the first section of pipe (2) and the third section of pipe (4).
- A normally open two-way solenoid valve (6) arranged downstream of the point of connection between the first section of pipe (2) and the third section of pipe (4), the solenoid valve (6) being close to the DHW outlet of the tap. Moreover, a second normally closed two-way solenoid valve (7) is arranged in the third section of pipe (4).
   This arrangement allows the system to behave like a normal tap in the absence of power supply due to failure of the power source or absence of electrical energy. The coordinated opening and closing of the solenoid valves (6) and (7) enables the recirculation of water when the temperature sensor (16) measures a temperature below a set reference temperature.
- A power source (9) which powers the temperature controller (8) and the solenoid valves. Typically, each solenoid valve (6) and (7) can consume about 5 W and the temperature sensor (16) can have a consumption of 1 W, so a power source (9) of about 15 W is more than enough for the entire device of the invention to work properly for final exits in a tap (14) installed in a washbasin or a shower. - A flow switch (5) arranged upstream of the first section of pipe (2) and activating the power source (9) to electrically power both the temperature controller (8) and the solenoid valves (6) and (7). The power source (9) can have different voltages and powers depending on the power requirements of the components used.

Preferably, the solenoid valves (6) and (7) will be half an inch in diameter, although it is true that the water-saving device (1) can have other dimensions in accordance with the thickness of the pipes in which it will be implemented. Therefore, the more general the pipes in which the device (1) is implemented are and the more DHW outlets to which they are connected, the larger the diameters of the ways or ports of the mentioned solenoid valves (6) and (7) should be.

In accordance with the configuration described in detail above, the water-saving device (1) of the invention has four connections for interconnection thereof to a DHW system, two inlet connections and two outlet connections.

Specifically, the first section of pipe (2) of the device (1) has two ends by way of openings or connections which are connected to the pipe through which DHW circulates: the connection of the first section of pipe (2) upstream is connected for DHW to enter and the connection of the first section of pipe (2) downstream is connected for DHW to come out, which connection will in turn be connected to the DHW inlet of the tap (14).

Moreover, the second section of pipe (3) of the device (1) has two ends by way of openings or connections which are connected to the pipe through which cold water circulates to a tap (14): a connection of the second section of pipe (3) is connected for cold water to enter and the other connection of the second section of pipe (3) is connected for cold water to come out.

By way of example it should be indicated that the two inlet connections of the device (1) are connected to wall outlets of the DHW pipe and the cold water pipe, for example, below the sink, basin or bidet; whereas the outlet connections of the device (1) are connected to the hoses of a tap (14) which corresponds to the consumption point.

Specifically in the standby state of the preferred embodiment of the water-saving device, the solenoid valve (6) is open, enabling water to come out through the tap (14), whereas the solenoid valve (7) is closed, preventing recirculation. The standby state is maintained when the temperature of the water circulating through the first section of pipe (2) is above the set reference temperature or when there is no electric power due to failure of the power source, when the batteries run out or simply due to the lack of electric supply in the power grid. The device therefore has a simple, straightforward, robust and fault- and error-tolerant configuration, both for the user and the system.

In that sense, the device of the invention is in an activation state when the temperature sensor (16) measures in the first section of pipe (2) a temperature below a set reference temperature. In that moment, the temperature controller (8) activates a relay which powers the solenoid valves (6) and (7), such that it causes the solenoid valve (6) to close, preventing water from coming out through the tap (14) and the solenoid valve (7) to open, facilitating the recirculation of water in order to pass it again through the DHW heater (15) until the heating of the DHW pipes up to the consumption point allows the reference temperature to be reached in the consumption point itself.

From a practical viewpoint, it should be indicated that in mixer taps (14), the user adjusts the position thereof to demand for a larger or smaller amount of hot water. Therefore, when the user is demanding only hot water, the device (1) of the invention, in its activation state, will prevent water from coming out through the tap (14) completely, since the water outlet of the pipe through which cold water circulates to the tap (14) is also closed.

In an example of the practical use of the invention, as depicted in Figure 1, the system in which the device (1) of the invention is interconnected has a booster pump (11) linked to a flow switch (12), which could be of the same type as that used by the device (1) in the element (5). The flow switch (12) is linked to a safety switch (13), which could be of the same type as that used by the device (1) in the element (10). These elements are arranged in the pipe through which DHW circulates, specifically before the water enters the device (1).

However, it would also be viable for the system in which the device (1) of the invention is interconnected not to have a booster pump and for the device (1) of the invention to include in its own configuration a booster pump linked to a flow switch, both being linked to a safety switch.

By way of illustrative example of a case of using the water-saving device (1) depicted in Figure 1 in accordance with the first preferred embodiment of the invention, the user opens the hot water tap (14) and observes the initially cold water coming out, at which time the booster pump (11) comes into operation upon being activated by means of the flow switch (12). Likewise, in that moment, the flow switch (5) switches if it detects a minimum amount of flow, activating the entry of current into the power source (9) which powers the temperature controller (8) and accordingly the temperature sensor (16) to which it is linked.

If the temperature sensor (16) detects a temperature below the set reference temperature, then the temperature controller (8) activates the relay which starts up the solenoid valves (6) and (7) to modify the position thereof and recirculate water. In that moment, the water circulating through the DHW pipe in its usual direction also starts to recirculate through the cold water pipe in the direction opposite the usual direction. During recirculation, since the DHW circuit with the cold water pipe circuit is closed, the pump in the house no longer suctions cold water from outside the house.

In that moment, the user observes an abrupt cut-off of the water coming out through the tap (14), while he could still hear that the booster pump (11) is in operation. As water is recirculated passing through the DHW heater (15), its temperature increases gradually until reaching the set reference temperature.

As soon as the temperature sensor (16) measures a value above the reference temperature for the water circulating through the DHW pipe, the device deactivates the solenoid valves, switching them to their standby state to allow the water to come out again through the tap (14) at the temperature required by the user.

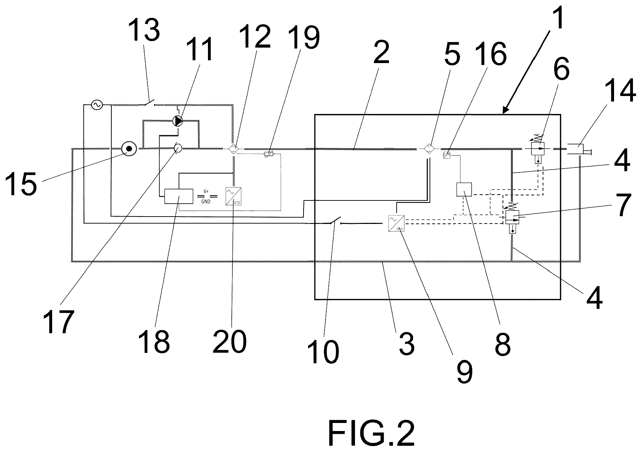

Moreover, Figure 2 depicts a second embodiment of the invention wherein the water-saving device (1) is complemented by a retention valve (17) which is located parallel to the booster pump (11). Optionally, it could also be arranged parallel to the flow switch (12) and the booster pump (11) simultaneously, with these two elements being in a serial configuration.

Optionally, the booster pump (11) is linked to a timer (18). The timer (18) will deactivate the booster pump (11) as depicted in Figure 2. This timer (18) may or may not be activated according to the user's indication and the wait time before deactivating the booster pump (11) can be programmed. This timer (18) will be activated when it is powered by the electrical power source (9) (or batteries or any other system) after this power source (9) is activated by the same flow switch (12) which activates the booster pump (11). Likewise, it should be indicated that the timer (18) is powered by a power source (20).

Finally, the second embodiment of the invention can also optionally include a second temperature sensor (19) arranged next to the booster pump (11), the second temperature sensor (19) being linked to the timer (18). In this way, the temperature sensor (19) will allow the timer (18) to deactivate the booster pump (11) if the DHW temperature does not reach the minimum service values after a reasonable amount of time. The timer (18) may or may not be activated according to the user's indication and the wait time before deactivating the booster pump (11) can be programmed.

## Claims

1. A water-saving device (1) for domestic hot water systems, **characterised in that** it comprises:
- a first section of pipe (2) for interconnection thereof to a pipe through which DHW circulates to a tap (14),
- a second section of pipe (3) for interconnection thereof to a pipe through which cold water circulates to a tap (14),
- a third section of pipe (4) that joins the first section of pipe (2) and the second section of pipe (3),
- a temperature controller (8) which is linked to a temperature sensor (16), wherein the temperature sensor (16) is installed in the first section of pipe (2),
- at least one solenoid valve arranged downstream in the first section of pipe (2) for recirculating water when the temperature sensor (16) measures a temperature below a set reference temperature,
- a power source (9) which powers the temperature controller (8) and the solenoid valve,
- a flow switch (5) arranged upstream of the first section of pipe (2) and activating the power source (9) to electrically power the temperature controller (8) and the solenoid valve,
wherein the temperature controller (8) activates the solenoid valve when the temperature sensor (16) measures in the first section of pipe (2) a temperature below a set reference temperature.

2. The water-saving device (1) for domestic hot water systems according to claim 1, **characterised in that** the solenoid valve is made up of a three-way solenoid valve arranged in the first section of pipe (2), and wherein one way connects with the third section of pipe (4) for recirculating water and the other two ways connect with the first section of pipe (2).

3. The water-saving device (1) for domestic hot water systems according to claim 1, **characterised in that** the solenoid valve is made up of a two-way solenoid valve (6) arranged in the first section of pipe (2), whereas the device is provided with a second two-way solenoid valve (7) arranged in the third section of pipe (4).

4. The water-saving device (1) for domestic hot water systems according to claim 1, **characterised in that** the temperature sensor (16) of the temperature controller (8) is externally coupled to the first section of pipe (2).

5. The water-saving device (1) for domestic hot water systems according to claim 1, **characterised in that** the temperature controller (8) includes a timer.

6. The water-saving device (1) for domestic hot water systems according to claim 1, **characterised in that** it is provided with a safety switch (10) linked to the power source (9).

7. The water-saving device (1) for domestic hot water systems according to claim 1, **characterised in that** it is provided with a booster pump (11) linked to a flow switch (12), arranged in the first section of pipe (2), specifically upstream of the flow switch (5).

8. The water-saving device (1) for domestic hot water systems according to claim 7, **characterised in that** it is provided with a safety switch (13) linked to the booster pump (11) and to the flow switch (12).

9. The water-saving device (1) for domestic hot water systems according to claim 7, **characterised in that** it is provided with a retention valve (17) arranged parallel to the booster pump (11).

10. The water-saving device (1) for domestic hot water systems according to claim 9, **characterised in that** it is provided with a timer (18) linked to the booster pump (11), the timer (18) being powered by a power source (20).

11. The water-saving device (1) for domestic hot water systems according to claim 10, **characterised in that** it is provided with a second temperature sensor (19) arranged next to the booster pump (11), the second temperature sensor (19) being linked to the timer (18).

12. The water-saving device (1) for domestic hot water systems according to claim 1, **characterised in that** it is provided with a hydrogenerator arranged upstream of the first section of pipe (2) for generating energy, wherein the hydrogenerator is connected to the solenoid valve, the power source (9) and/or the temperature controller (8).

13. The water-saving device (1) for domestic hot water systems according to claim 1, **characterised in that** it includes batteries connected to the power source (9), the temperature controller (8) and/or the solenoid valve.

14. The water-saving device (1) for domestic hot water systems according to claim 13, **characterised in that** the batteries include a power input.

15. The water-saving device (1) for domestic hot water systems according to claim 13, **characterised in that** it is provided with a hydrogenerator arranged upstream of the first section of pipe (2) for generating energy, wherein the hydrogenerator is connected to the batteries by means of a power circuit.

16. The water-saving device (1) for domestic hot water systems according to claim 12 or 15, **characterised in that** it is provided with a relay connected to the hydrogenerator and the power source (9), such that the energy generated by the hydrogenerator activates the relay and the relay connects the power source (9).

17. The water-saving device (1) for domestic hot water systems according to any of the preceding claims, **characterised in that** the solenoid valve is bistable.
